# EUROPEAN PATENT APPLICATION

(11) **EP 2 628 935 A2**
(43) Date of publication of application: **21.08.2013**
(21) Application number: 13153363.0
(22) Date of filing: 30.01.2013
(51) Int. Cl.: F02K 1/06, F02K 1/54

(54) **Actuator assembly**

(30) Priority: 16.02.2012 US 201213397798
(71) Applicant: Hamilton Sundstrand Corporation, Windsor Locks, CT 06096-1010 (US)
(72) Inventor: Jones, Teddy L., Cherry Valley, IL Illinois 61016 (US)
(74) Representative: Tomlinson, Kerry John

(57) **Abstract**

An actuator assembly (14) includes a rotatable first shaft (22), a second shaft (26), and a ball screw mechanism (24). The second shaft (26) is telescopically received in and extensible relative to the first shaft (22). The second shaft (26) is rotatable with the first shaft (22) and is connected to and drives the ball screw mechanism (24).

## Description

### BACKGROUND

Jet engines typically include movable parts, which can be moved outward or retracted at various times through a flight. These movable parts are typically moved through actuation mechanisms of various types.

The thrust reverser system of an engine may include a number of such movable parts. Generally a thrust reverser system includes two thrust reverser cowls. The thrust reverser cowls are actuated independently, and are located on each side of the engine, one on the right side and one on the left side. Each thrust reverser cowl assembly further may include a variable area fan nozzle ("VAFN") cowl which needs to be able to move with the thrust reverser cowl, and further be able to translate beyond the movements with the thrust reverser cowl. This is sometimes done by attaching a gearbox and motor assembly to the thrust reverser cowl assembly translating frame. Such an assembly adds weight to the engine.

### SUMMARY

An actuator assembly includes a rotatable first shaft, a second shaft, and a ball screw mechanism. The second shaft is telescopically received in and extensible relative to the first shaft. The second shaft is rotatable with the first shaft and is connected to and drives the ball screw mechanism.

In one embodiment, the actuator assembly is mounted to the nacelle of an engine. The gas turbine engine includes a thrust reverser cowl that is movable between a first position and a second position and a variable area fan nozzle cowl movable with the thrust reverser cowl and further movable beyond the thrust reverser cowl. In one embodiment, a gearbox and the first shaft are mounted to a stationary portion of the nacelle and the second shaft is connected to and is movable with the thrust reverser cowl. The ball screw mechanism is connected to and drives the variable area fan nozzle cowl to move the variable area fan nozzle cowl relative to the thrust reverser cowl.

### BRIEF DESCRIPTION OF THE DRAWINGS

FIG. 1A is a side view of an actuator assembly mounted to a nacelle of an engine along with an external position sensor where the thrust reverser cowl and the VAFN cowl closed.

FIG. 1B is a side view of the actuation system of FIG. 1A with the thrust reverser cowl open and the VAFN cowl open.

FIG. 2 is a perspective view of one embodiment of the actuator assembly which includes a gearbox, an outer shaft, and a ball screw mechanism.

FIG. 2A is a perspective view of the actuator assembly of FIG. 2 with portions of the ball screw mechanism and the outer shaft removed to show an inner shaft.

FIG. 3A is a partial sectional view of another embodiment of the actuator assembly that utilizes a position sensor disposed the inner and outer shafts.

FIG. 3B is perspective view of the actuator assembly of FIG. 3A with the gearbox removed to reveal a worm gear assembly and a linear variable differential transformer.

### DETAILED DESCRIPTION

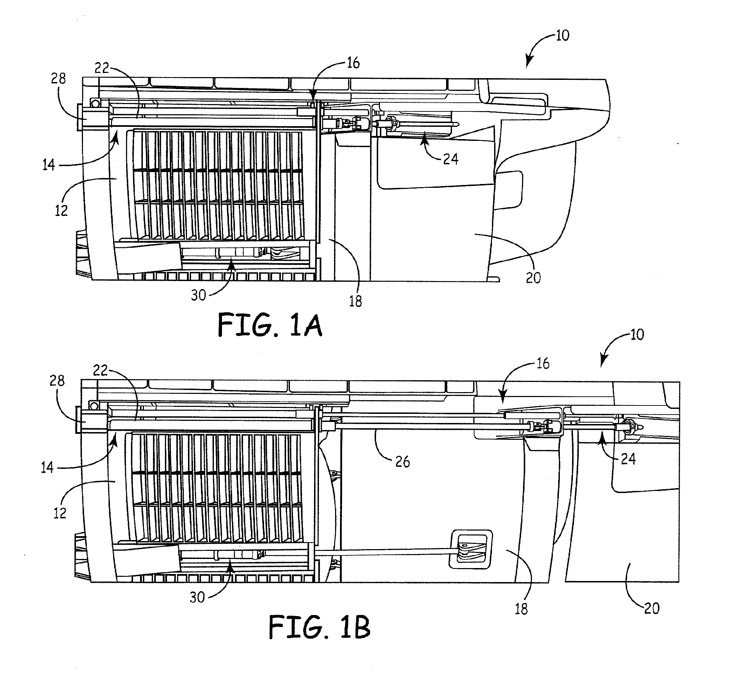

FIG. 1A shows an actuator assembly 14 mounted to a nacelle 12 of an engine 10 where a thrust reverser cowl 18 and a VAFN cowl 20 are in a closed or stowed position. FIG. 1B shows the actuator assembly 14 extended with thrust reverser cowl 18 and VAFN cowl 20 in an open or deployed position. The embodiment of the actuator assembly 14 shown in FIGS. 1A and 1B includes a first, outer shaft 22, a ball screw mechanism 24, and a gearbox 28. In FIG. 1B, a second, inner shaft 26 is extended from outer shaft 22 and translates with thrust reverser cowl 18. FIGS. 1A and 1B additionally illustrate a position sensor 16 disposed external to actuator assembly 14 and a thrust reverser actuation system 30 that comprises a separate actuator from actuator assembly 14.

As shown in FIGS 1A and 1B, actuator assembly 14 is mounted to nacelle 12 and extends generally parallel to a position sensor 16 such as a linear variable differential transformer ("LVDT"). Position sensor 16 determines the position of inner shaft 26 and ball screw mechanism 24 in order to determine the position of thrust reverser cowl 18 and VAFN cowl 20 for control purposes. In the embodiment shown, outer shaft 22 is mounted to a stator portion of nacelle 12 and is free to rotate relative thereto when driven.

Inner shaft 26 is mounted to and is translatable with thrust reverser cowl 18 and is capable of rotational movement with respect thereto. As shown in FIG. 1A, inner shaft 26 is telescopically housed within outer shaft 22 when thrust reverser cowl 18 is in the stowed position. In the embodiment shown in FIGS. 1A and 1B, inner shaft 26 is connected to outer shaft 22 by spline connection. The spline connection allows inner shaft 26 to rotate with outer shaft 22 while allowing inner shaft 26 to translate and extend relative to outer shaft 22 with movement of thrust reverser cowl 18. In the embodiment shown, thrust reverser cowl 18 is actuated and moved to and from the stowed and deployed positions (FIGS. 1A and 1B) by thrust reverser cowl actuation system 30. Thus, thrust reverser actuation system 30 operates as a different system independent of actuator assembly 14 for VAFN cowl 20. Actuator assembly 14 must accommodate movement of thrust reverser cowl 18 while operating to move VAFN cowl 20 to and from the stowed and deployed positions.

A distal end of inner shaft 26 is connected directly to ball screw mechanism 24. Ball screw mechanism 24 is mounted to VAFN cowl 20 and is driven by rotation of inner shaft 26 to translate and extend or retract VAFN cowl 20 relative to thrust reverser cowl 18. Gearbox 28 is mounted to the stator portion of nacelle adjacent the distal portion of outer shaft 22. Gearbox 28 is connected by flex shaft or similar device to a hydraulic motor drive or an electric motor drive as further described in United States Patent Application Publication 2009/0013664A1. Gearbox 28 operates to transfer torque from flex shaft to outer shaft 22. In turn, outer shaft 22 transfers torque to inner shaft 26 by aforementioned spline connection and inner shaft 22 transfers drive torque to ball screw mechanism 24 to move VAFN cowl 18.

Actuator assembly 14 allows VAFN cowl 20 to move with thrust reverser cowl 18 and additionally to have VAFN cowl 20 be driven from an actuator mounted to a stator part such as nacelle 12. This results in a more efficient, lighter weight, and simpler differential movement actuation system than prior art systems. Some past systems attempted to overcome challenges associated with being able to actuate the VAFN cowl while still allowing it to move with the thrust reverser cowl by attaching the actuation system to the thrust reverser cowl. This resulted in the thrust reverser cowl being much less efficient, having to carry the additional weight of the actuation system. Past systems presented challenges in accommodating the translating electrical wires (which provide the motor with electricity to run). Other systems would drive the VAFN cowl from the fixed structure, but would coordinate the actuation with the actuation of the thrust reverser cowl, resulting in a need to monitor and actuate multiple systems in concert. This presented challenges requiring the actuation systems be monitored closely to ensure they were both working and working together so no parts would be damaged if one was not working. These systems also required more power as both actuation systems had to be working for any type of movement. The actuation system of the current invention overcomes the challenges of past systems by actuating the VAFN cowl from a fixed surface and allowing the shaft to be driven by a drive unit but to also move freely through the drive unit when the VAFN cowl is moving with the thrust reverser cowl.

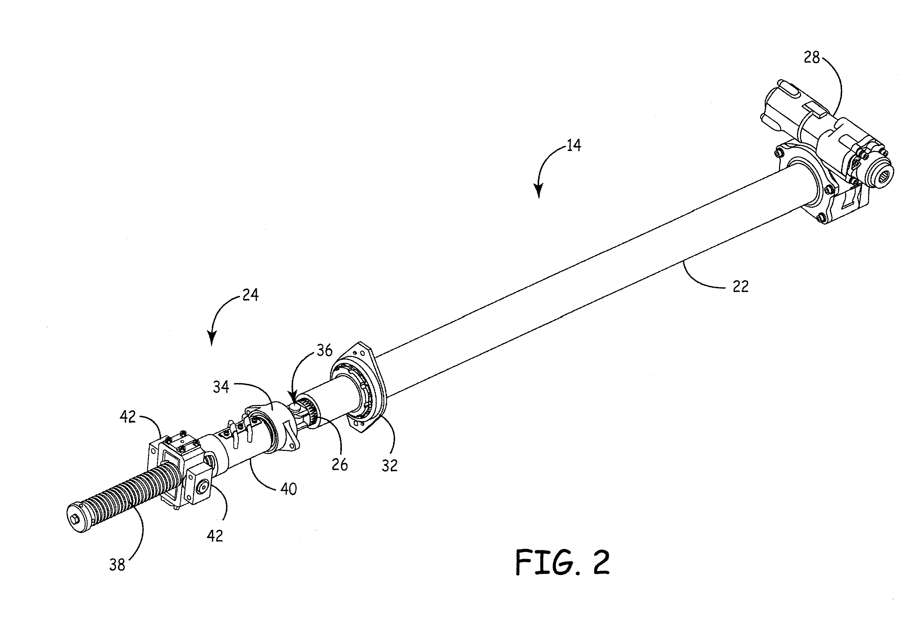

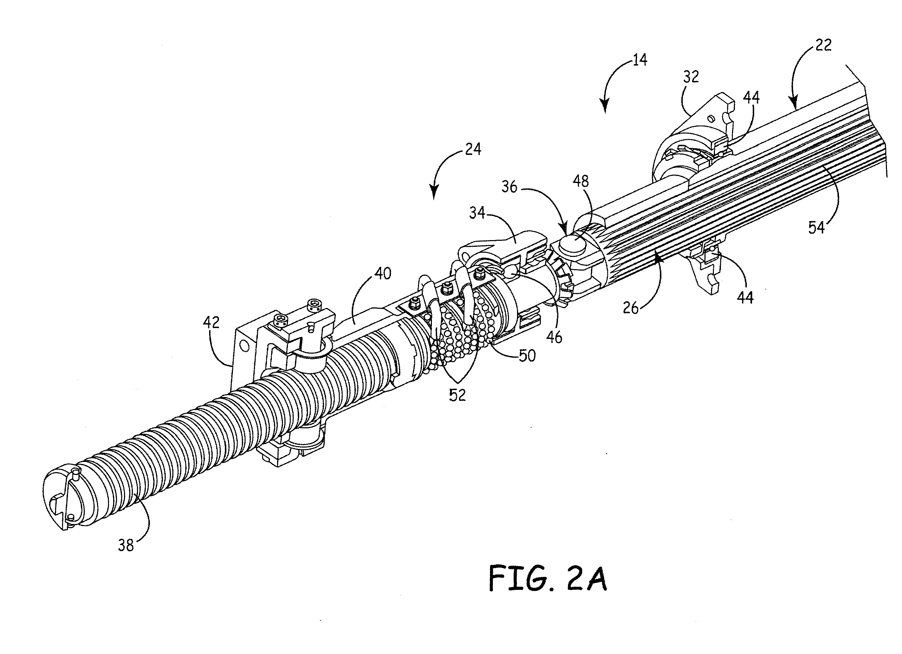

FIGS. 2 and 2A show actuator assembly 14 where thrust reverser cowl 18 (FIG. 1A) and VAFN cowl 20 (FIG. 1A) are stowed (i.e. in a closed position). FIG. 2A shows a distal end of actuator assembly 14 with portions of the ball screw mechanism 24 and the outer shaft 22 removed to show inner shaft 26 and other components. In addition to outer shaft 22, ball screw mechanism 24, inner shaft 26 and gearbox 28, actuator assembly 14 includes a first bearing support 32, a second bearing support 34, and a coupling 36. Ball screw mechanism 24 includes a ball screw 38, a ball nut 40, and gimbal mounts 42.

As shown in FIG. 2A, first bearing support 32 includes bearings 44. Second bearing support 34 includes bearings 46. Coupling 36 includes a clevis pin 48. Ball nut 40 includes balls 50 and recirculation tubes 52. Inner shaft 26 includes splines 54.

As shown in FIG. 2, gearbox 28 is mounted to and supports outer shaft 22 at a proximal end. Outer shaft 22 is supported near a distal end by first bearing support 32. First bearing support 32 includes a flange connection with holes allowing first bearing support 32 to be connected to stator nacelle 12 (FIGS. 1A and 1B) by fasteners or other means. As shown in FIG. 2A, first bearing support 32 includes internal bearings 44 which allow outer shaft 22 to rotate relative to stator nacelle 12.

Second bearing support 34 is disposed distal to first bearing support 32 adjacent ball screw mechanism 24. Similar to first bearing support 32, second bearing support includes bearings 46, which allow inner shaft 26 and ball screw 38 to rotate relative to thrust reverser cowl 18 (FIGS. 1A and 1B). Second bearing support 34 is mounted to thrust reverser cowl 18 (FIGS. 1A and 1B) by fasteners or other known means.

Ball screw 38 extends from and is supported by second bearing support 34. Ball screw 38 is connected to inner shaft 26 by coupling 36. In the embodiment shown, coupling 36 utilizes a clevis pin 48 (FIG. 2A), in other embodiments connection of the inner shaft 26 and ball screw 38 can be accomplished by other known connections such as a universal joint. In operation, ball screw 38 is driven by inner shaft 26.

The construction and operation of ball screw mechanism 24 is known in the art, and therefore, will not be described in detail. As discussed previously, ball screw 38 is driven and comprises a threaded shaft. The threaded shaft provides a helical raceway for balls 50 (FIG. 2A). Balls 50 (FIG. 2A) are disposed between ball nut 40 and ball screw 38 and allow ball nut 40 to translate relative to ball screw 38 (FIG. 2A). Balls 50 (FIG. 2A) are captured within ball nut 40 and are recycled as ball nut 40 translates. In the embodiment shown, balls 50 (FIG. 2A) are recycled through redundant recycling tubes 52 (FIG. 2A) as ball nut 40 translates relative to ball screw 38.

In the embodiment shown, gimbal mounts 42 are connected to ball nut 40. Gimbal mounts 42 connect to suitable mounting features of VAFN cowl 20 (FIGS. 1A and 1B). Thus, linear translation of ball nut 40 is transferred to open and close VAFN cowl 20 (FIGS. 1A and 1B).

As illustrated in FIG. 2A, inner shaft 26 includes splines 54 and outer shaft 22 includes cooperating mating splines (not shown). During operation, splines 54 allow torque and rotation to be transferred between outer shaft 22 and inner shaft 26 while allowing inner shaft 26 to translate relative to outer shaft 22 with the movement of thrust reverser cowl 18 (FIG. 1B), which is moved by separate thrust reverser actuation system 30 (FIGS. 1A and 1B). Ball screw 38 is connected to and driven by inner shaft 26. Rotation of ball screw 38 causes linear translation of ball nut 40 to open and close VAFN cowl 20 (FIGS. 1A and 1B).

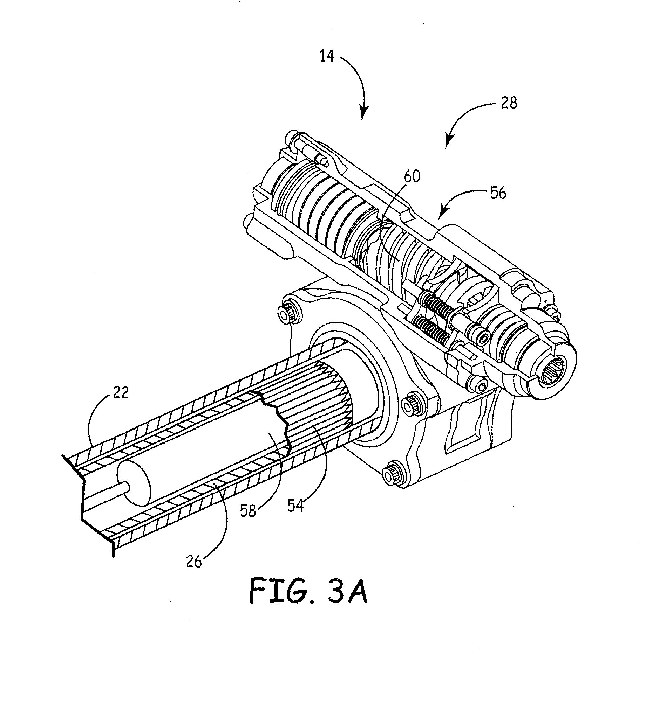

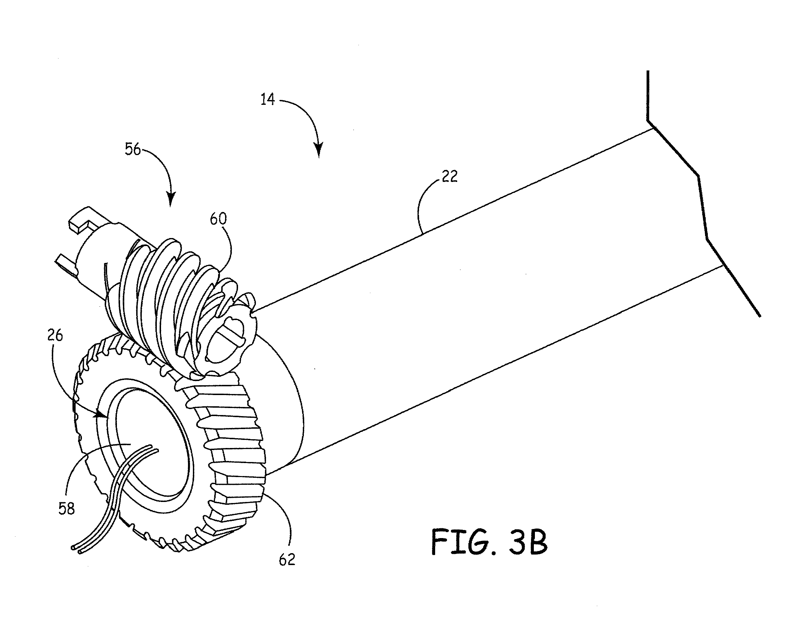

FIG. 3A shows a partial sectional view of another embodiment of actuator assembly 14 with portions of gearbox 28, outer shaft 22, and inner shaft 26 removed. This embodiment incorporates an internal position sensor which is disposed within the inner shaft 26. Thus, actuator assembly 14 need not include an external position sensor such as position sensor 16 (FIGS. 1A and 1B). FIG. 3B shows the outer shaft 22 with gearbox 28 removed. FIGS. 3A and 3B show a worm gear assembly 56 and a position sensor 58. FIG. 3B shows worm gear assembly 56 with worm gear 60 and wheel 62.

As shown in FIG. 3A, gearbox 28 can utilize a gimbal mount, blade/clevis or another mounting configuration known in the art in order to connect to nacelle 12 (FIG. 1A). As previously discussed, gearbox 28 is connected to and receives torque from one or more flex shafts (not shown). Gearbox 28 transfers torque from the flex shaft(s) to outer shaft 22 utilizing worm gear assembly 56. In other embodiments, torque transfer to outer shaft 22 can be accomplished by a bevel gear set or any mechanical arrangement capable of transferring torque 90°.

As shown in FIG. 3B, worm gear assembly 56 comprises worm gear 60 which is positioned within gearbox 28 (FIG. 3A) and is driven by flex shaft (not shown) and wheel 62. Wheel 62 is positioned around and splined to outer shaft 22. Worm gear 60 is configured to drive wheel 62 in order to transfer torque to outer shaft 22 from flex shaft (not shown).

As shown in FIGS. 3A and 3B, position sensor 58 such as a linear variable differential transformer 58 can be disposed within inner shaft 26. Electrical wires and position sensor 58 can be inserted through open distal portion of inner shaft 26 as illustrated in FIG. 3B. Position sensor 58 determines the position of inner shaft 26 and ball screw mechanism 24 in order to determine the position of thrust reverser cowl 18 (FIGS. 1A and 1B) and VAFN cowl 20 (FIGS. 1A and 1B) for control purposes.

The actuator assembly described allows for surface movements between different components with minimal parts by providing for passive movement of a second (inner shaft 26) shaft relative to a first shaft (outer shaft 22) when a surface (such as a thrust reverser cowl 18) is being moved by another actuation system. Because the second shaft is able to passively move and extend, portions of the actuation system such as the gearbox and first shaft can be fixed to a stationary surface, which provides stability. This also results in an efficient system allowing for passive movement instead of having to separately actuate (and coordinate) each surface.

While the invention has been discussed in terms of actuating a VAFN cowl connected to a thrust reverser cowl assembly, it could be used on any system which requires differential surface movement in connection with an actuation system. For example, it may be used on flap or slat systems on an aircraft.

While the invention has been described with reference to an exemplary embodiments, it will be understood by those skilled in the art that various changes may be made and equivalents may be substituted for elements thereof without departing from the scope of the invention, which is defined by the appended claims. In addition, many modifications may be made to adapt a particular situation or material to the teachings of the invention without departing from the scope thereof. Therefore, it is intended that the invention not be limited to the particular embodiments disclosed, but that the invention will include all embodiments falling within the scope of the appended claims.

## Claims

1. An actuator assembly (14), comprising:
a rotatable first shaft (22);
a second shaft (26) telescopically received within and extensible relative to the first shaft, wherein the second shaft is rotatable with the first shaft; and
a ball screw mechanism (24) connected to and configured to be driven by the second shaft.

2. The assembly of claim 1, wherein the second shaft is connected to the first shaft through a spline connection.

3. The assembly of claim 1 or 2, further comprising a gearbox (28) connected to the first shaft.

4. The assembly of claim 1, 2 or 3, further comprising:
a stationary surface (12) connected to the first shaft;
a first surface (18) connected to the second shaft and movable between a first position and a second position;
a second surface (20) connected to the ball screw mechanism, wherein the second surface is movable with the first surface and is further movable beyond the first surface driven by the ball screw mechanism.

5. The assembly of claim 4, wherein the first surface is movable by a second actuation system (30) and wherein the second shaft is passively extensible and retractable with the movement of the first surface.

6. The assembly of claim 4 or 5, wherein the first surface is a thrust reverser cowl (18).

7. The assembly of claim 4, 5 or 6, wherein the second surface is a variable area fan nozzle cowl (20); preferably wherein the ball screw mechanism is configured to drive the variable area fan nozzle cowl to move the variable area fan nozzle cowl between a stowed position and a deployed position.

8. The assembly of any of claims 4 to 7, wherein the stationary surface is a stationary nacelle (12).

9. The assembly of claims 3 and 8, wherein the gearbox is mounted on the stationary nacelle.

10. The assembly of any of claims 4 to 9, wherein the ball screw mechanism comprises:
a ball nut (40) connected to the second surface; and
a ball screw (38) connected to the second shaft;
wherein, the ball nut is configured to translate rotational motion from the first shaft and the screw into linear motion for the second surface.

11. The assembly of any preceding claim, further comprising:
a position sensor (58) disposed within the second shaft; and/or
a position sensor (16) disposed at a distance from the first shaft, the second shaft, and the ball screw mechanism.

12. A method of driving a thrust reverser cowl (18) relative to a variable area fan nozzle cowl (20) from a fixed surface (18), the system comprising:
rotating a first shaft (22) from a fixed surface position;
translating a co-rotating second shaft (26) relative to the first shaft;
driving a ball screw mechanism (24) with the second shaft; and
moving the second surface relative to the first surface with the ball screw mechanism.

13. The method of claim 12, further comprising moving the thrust reverser cowl between a first position and a second position by driving a second actuation system (30).

14. The method of claim 12 or 13, further comprising:
connecting a gearbox (28) to the first shaft;
mounting the gearbox to the fixed surface, and
mounting to the second shaft to the thrust reverser cowl.

15. The method of claim 12, 13 or 14, further comprising positioning a sensor (58) within the second shaft.
